# EUROPEAN PATENT APPLICATION

(11) **EP 3 705 741 A1**
(43) Date of publication of application: **09.09.2020**
(21) Application number: 18874628.3
(22) Date of filing: 25.10.2018
(51) Int. Cl.: F16C 1/10

(54) **TERMINAL SUPPORT DEVICE AND CONTROL CABLE ASSEMBLY USING TERMINAL SUPPORT DEVICE**

(30) Priority: 31.10.2017 JP 2017210788
(71) Applicant: HI-LEX Corporation, Takarazuka-shi, Hyogo 665-0845 (JP)
(72) Inventor: YOKOMATSU, Mutsuhiro, Takarazuka-shi Hyogo 665-0845 (JP)
(74) Representative: Hoffmann Eitle
(86) International application number: PCT/JP2018/039608
(87) International publication number: WO 2019/087913

(57) **Abstract**

A terminal support device 1 includes a cap 2 to which a terminal of an outer casing C1 is fixed; a guide pipe 3; an elastic member 4 having an opening portion at both ends; and a socket member 5 which encircles the elastic member 4, and using the terminal support device in which the socket member 5 is made of a hard member, the elastic member 4 has an internal space portion 43 communicating with the opening portion at both the ends, the cap 2 and the guide pipe 3 are connected to the opening portion at both the ends of the elastic member 4, the elastic member 4 has a flange portion 44 extending in a direction perpendicular to an axial direction in which the internal space portion 43 extends, and a flat portion 45 on a surface facing the axial direction of the flange portion 44, the socket member 5 has a pressing surface 53 gripping the flange portion 44 in the axial direction, and the pressing surface 53 is provided with a plurality of contact portions 53a that come in contact with the flat portion 45 and a plurality of non-contact portions 53b having a spacing with respect to the flat portion 45, a reduction in a vibration isolating effect of a portion where the elastic member is not in contact with the socket is prevented.

## Description

### Technical Field

The present invention relates to a terminal support device and a control cable assembly using the same.

### Background Art

In the case of mounting a control cable to a mounting object, a terminal support device which is connected to a terminal of an outer casing constituting a part of the control cable to thereby be mounted to the mounting object may be used. As the terminal support device, for example, a terminal support device including a cylindrical casing cap, an elastic member, and a cylindrical socket is disclosed in order to prevent transmission of vibration to the cable (see, for example, Patent Literature 1). The cylindrical casing cap has a conduit holder having the end of a conduit of the control cable fixed to the rear end, and has a flange in the outer periphery. The cylindrical socket houses the elastic member so as to surround the elastic member, has front and rear inner walls to elastically insert a collar of the elastic member in the axial direction, and includes a mounting portion to the mating member. In the terminal support device, a plurality of projections which are mutually spaced between the front and rear surfaces of the collar so that the elastic member abuts on the front and the rear inner walls of the socket, are formed.

In the terminal support device, the elastic member is provided with projecting and recessed portions formed by the projections, so that the projections, which are projecting portions of the elastic member, abut on the socket, and the recessed portions of the elastic member are not directly in contact with the socket.

### Citation List

### Patent Literature

Patent Literature 1: JP 2008-19977 A

### Summary of Invention

### Technical Problem

However, when the elastic member is firmly gripped by the socket so as not to move the control cable, the projections of the elastic member are deformed in the thickness and width directions due to spaces in the recessed portions near the projections of the elastic member, so that the deformation of the projections may affect the recessed portions that are not in contact with the socket. Therefore, the recessed portions of the elastic member, which are not in contact with the socket, are also affected by the pressure generated by the deformation of the projections, which may in turn lower the vibration isolating capability of the recessed portions of the elastic member.

The present invention provides a terminal support device and a control cable assembly using the same, which prevent a reduction in a vibration isolating effect of a portion where an elastic member is not in contact with a socket.

### Solution to Problem

The terminal support device of the present invention includes a cap to which a terminal of an outer casing of a control cable is fixed; a guide pipe which guides an inner cable in a desired direction; an elastic member having an opening portion at both ends; and a socket member which encircles the elastic member, in which the socket member is made of a hard member, the elastic member has an internal space portion communicating with the opening portion at both the ends, the cap and the guide pipe are connected to the opening portion at both the ends of the elastic member so as to be opposite to each other, the elastic member has a flange portion extending in a direction perpendicular to an axial direction in which the internal space portion extends, and a flat portion on a surface facing the axial direction of the flange portion, the socket member has a pressing surface gripping the flange portion in the axial direction, and the pressing surface is provided with a plurality of contact portions that come in contact with the flat portion and a plurality of non-contact portions having a spacing with respect to the flat portion.

The control cable assembly of the present invention includes the above-mentioned terminal support device; and a control cable having an outer casing and an inner cable, in which the cap of the terminal support device is provided at the leading end of the outer casing.

### Advantageous Effects of Invention

According to the terminal support device and the control cable assembly using the same, the reduction in the vibration isolating effect of the portion where the elastic member is not in contact with the socket may be prevented.

### Brief Description of Drawings

Fig. 1 is an exploded perspective view of a control cable assembly according to an embodiment of the present invention.
Fig. 2 is a longitudinal sectional view of a terminal support device according to an embodiment of the present invention.
Fig. 3 is an end view of an elastic member cut in the axial direction of the terminal support device of Fig. 2.
Fig. 4 is an end view showing a modified form of the elastic member used in the terminal support device of Fig. 2.
Fig. 5 is a side view of a socket member of the terminal support device of Fig. 2.
Fig. 6 is a cross-sectional view of the socket member taken along the line VI-VI in Fig. 5.
Fig. 7 is a cross-sectional view of the socket member taken along the line VII-VII in Fig. 5.
Fig. 8 is a cross-sectional view of the socket member taken along the line VIII-VIII in Fig. 5.

### Description of Embodiments

The terminal support device and the control cable assembly using the terminal support device according to an embodiment of the present invention will be described below with reference to the drawings. The embodiment given below is provided merely as an example, and the terminal support device and the control cable assembly using the terminal support device are not limited to the following embodiment.

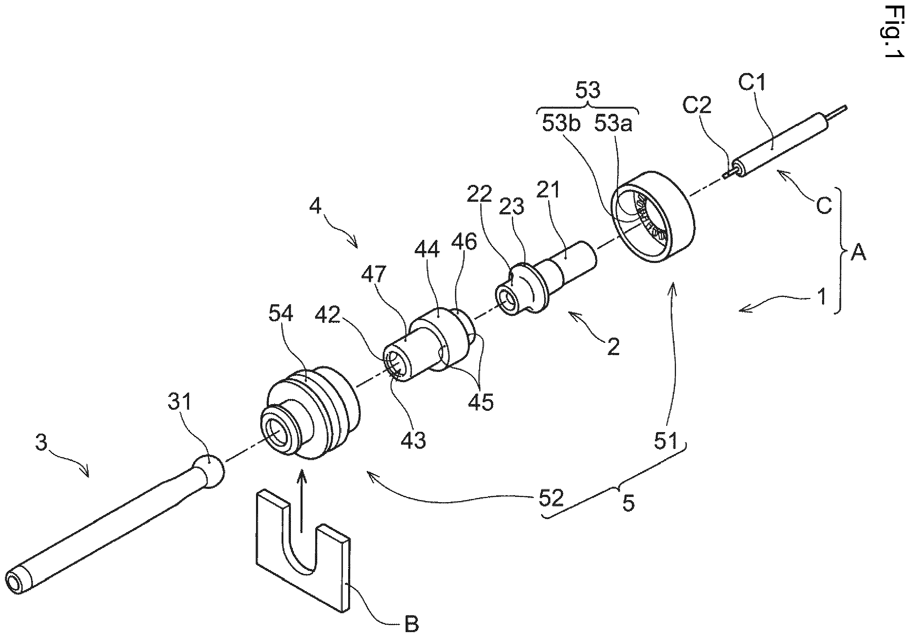

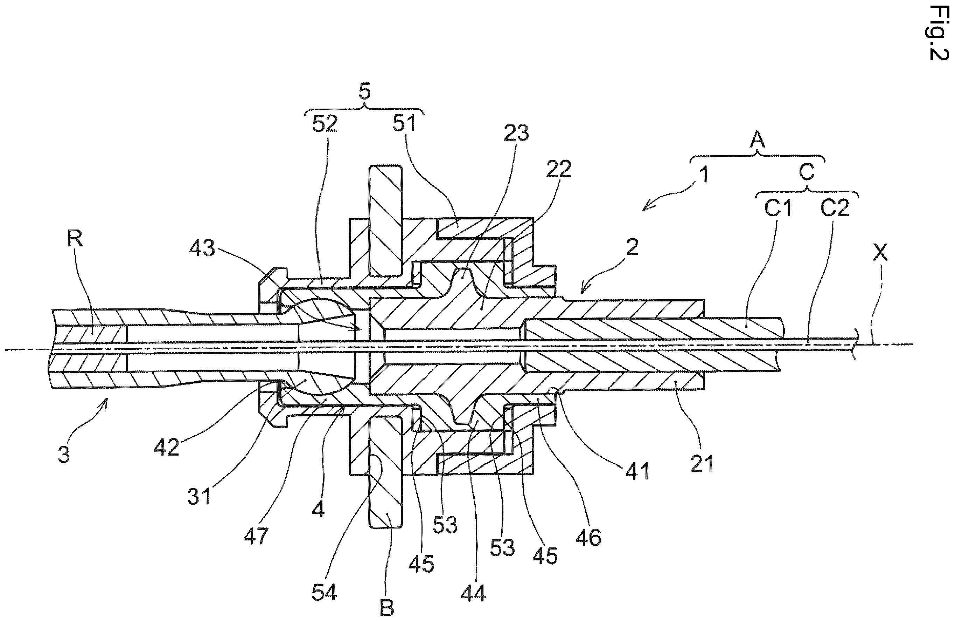

As shown in Figs. 1 and 2, the control cable assembly A of the present embodiment includes a terminal support device 1 and a control cable C having an outer casing C1 and an inner cable C2. A cap 2 of the terminal support device 1 is provided at the leading end of the outer casing C1, and the control cable C is mounted to the terminal support device 1. For example, the control cable assembly A is provided between an operating portion such as a shift lever (not shown) and an operated portion such as a transmission (not shown) in a vehicle or the like, and is used to transmit an operation force generated by the operation of the operating portion to the operated portion. The following embodiment is described with reference to an example in which, between the shift lever and the transmission of the vehicle, the terminal support device 1 is fixed to a bracket B provided in the vehicle, and the control cable assembly A is used to transmit the operation force generated at the shift lever to the transmission. The control cable assembly may, however, be applicable to other portions of the vehicle or uses other than vehicles.

The terminal support device 1 is a device for supporting a terminal of the outer casing C1 of the control cable C and mounting the control cable C to a mounting object such as a vehicle. As shown in Figs. 1 and 2, the terminal support device 1 has the cap 2 to which the terminal of the outer casing C1 of the control cable C is fixed, a guide pipe 3 that guides the inner cable C2 in a desired direction, an elastic member 4, and a socket member 5 that encircles the elastic member 4. The terminal support device 1 supports the control cable C by fixing the terminal of the outer casing C1 of the control cable C to the cap 2, and then mounting the socket member 5 to the bracket B, which is a mounting object, so that the control cable C is mounted to the mounting object. The terminal support device is not limited to use for vehicle, and may be applicable to other uses that need to support the terminal of the outer casing of the control cable and then mount the control cable to the mounting object.

The control cable C is routed between the operating portion such as a shift lever and the operated portion such as a transmission, to transmit an operation force generated by the operation of the operating portion to the operated portion. As shown in Fig. 2, the control cable C has the outer casing C1 that guides the inner cable C2 along the routing path between the operating portion and the operated portion, and the inner cable C2 that is slidably inserted through the outer casing C1. The outer casing C1 has one end terminal fixed to the operating portion side (the right side in Fig. 2) and its other end terminal fixed to the cap 2 of the terminal support device 1 on the operated portion side (the left side in Fig. 2), and the outer casing C1 is routed between the operating portion side and the operated portion side. The inner cable C2 has one end connected to the operating portion and extending through the inner sides of the outer casing C1 and the terminal support device 1, and its other end connected to the operated portion (through a rod R slidably inserted in the guide pipe 3). The inner cable C2 then transmits the operation force generated by the operation of the operating portion to the operated portion. The control cable C is not particularly limited as long as it is possible to route the control cable C between the operating portion and the operated portion to thereby transmit the operation force of the operating portion to the operated portion, and for example, a known control cable may be used.

The cap 2 is a member for mounting the terminal of the outer casing C1 to the socket member 5 with the elastic member 4 being interposed therebetween. As shown in Figs. 1 and 2, the cap 2 has the terminal of the outer casing C1 fixed thereto and is connected to the elastic member 4 that is encircled by the socket member 5. In the present embodiment, the cap 2 is formed in a generally cylindrical shape, with both ends opening in the axial (coaxial to an axis X in which an internal space portion 43 to be described later extends) direction in which the cap 2 extends, and has an internal space that communicates with the opening at both ends along the direction of the axis X. The cap 2 has an outer casing fixing portion 21 on one end side (operation portion side) in the direction of the axis X, and an inner cable inserting portion 22 on the other end side (operated portion side) in the direction of the axis X. The terminal of the outer casing C1 is inserted into the internal space of the outer casing fixing portion 21 along the direction of the axis X, and is then fixed to the outer casing fixing portion 21 by known fixing means such as swaging or the like. The inner cable C2 is movably inserted into the internal space of the inner cable inserting portion 22 along the direction of the axis X. The cap 2 is connected to the elastic member 4 on the side of the inner cable inserting portion 22 and is then mounted to the socket member 5 that encircles the elastic member 4. At this time, a collar 23 having an annular shape provided on the outer periphery of the cap 2 so as to project outward in the radial direction is fitted into the elastic member 4, so that the axial movement of the cap 2 to the elastic member 4 is restricted. In the present embodiment, the cap 2 is formed in a generally cylindrical shape, but it may have any other shape such as a generally square cylindrical shape as long as it is possible to mount the terminal of the outer casing C1 to the socket member 5 through the elastic member 4. In particular, the shape and material thereof are not limited. The collar 23 has a surface facing one end side of the cap 2 in the axial direction and a surface facing the other end side thereof on the outer periphery of the cap 2, both of the surfaces being gripped by the elastic member 4. The collar 23 is supported by the socket member 5 in the axial direction of the cap 2, with the elastic member 4 being interposed therebetween.

The guide pipe 3 is a member that is mounted to the socket member 5 with the elastic member 4 being interposed therebetween and guides the inner cable C2 in a desired direction. In the present embodiment, the guide pipe 3 is formed in a generally cylindrical shape, and has the rod R to be connected to the operated portion such as a transmission slidably inserted into the inner side thereof, and the inner cable C2 to be connected to the rod R slidably inserted into the inner side thereof, as shown in Figs. 1 and 2. The guide pipe 3 is mounted to the socket member 5 that encircles the elastic member 4, with a spherical portion 31 provided at the end in the axial direction in which the guide pipe 3 extends being swingably connected to the elastic member 4. The guide pipe 3 guides the inner cable C2 in a desired direction by rocking about the spherical portion 31. The shape and material of the guide pipe 3 is not particularly limited as long as the guide pipe 3 can guide the inner cable C2 in a desired direction, and a known guide pipe may be used.

The elastic member 4 is a member that has the cap 2 and the guide pipe 3 connected thereto and prevents vibration from transmitting to the control cable C through the cap 2 and the guide pipe 3. As shown in Fig. 2, the elastic member 4 has an opening portion 41, 42 at both ends thereof, and an internal space portion 43 communicating with the opening portions 41, 42 at the ends. The cap 2 and the guide pipe 3 are connected to the opening portions 41, 42 at the ends of the elastic member 4 so as to be opposite to each other. The elastic member 4 absorbs vibration transmitted through the guide pipe 3 from the side of the operated portion such as a transmission, and prevents the vibration from transmitting to the control cable C through the cap 2. This prevents the vibration from transmitting to the side of the operating portion such as a shift lever from the control cable C. In the present embodiment, the cap 2 is housed in the internal space portion 43 through the opening portion 41 on one end side (operating portion side) of the elastic member 4, to thereby be connected to the elastic member 4. The elastic member 4 houses the cap 2 in the internal space portion 43 so that the inner peripheral surface thereof elastically abuts on the outer peripheral surface of the cap 2 on the other end side (operated portion side). The cap 2 is fixed to the elastic member 4 by fitting the collar 23 into a fitting hole provided in the inner periphery of a flange portion 44 (to be described later) of the elastic member 4, so that the movement in the direction of the axis X to the elastic member 4 is restricted. On the other hand, the guide pipe 3 is connected to the elastic member 4 by housing the guide pipe 3 into the internal space portion 43 through the opening portion 42 on the other end side (operated portion side) of the elastic member 4. The elastic member 4 houses the guide pipe 3 swingably in the internal space portion 43 so that the inner peripheral surface thereof elastically abuts on the outer peripheral surface of the spherical portion 31 of the guide pipe 3. With an elastic force of the elastic member 4 through the contact surface between the inner peripheral surface of the elastic member 4 and the outer peripheral surfaces of the cap 2 and the guide pipe 3, the elastic member 4 prevents the vibration from transmitting to the control cable C through the cap 2 and the guide pipe 3. The cap 2 and the guide pipe 3 may be connected with the opening portions 41, 42 at the ends of the elastic member 4 respectively so as to prevent the vibration from transmitting to the control cable C, and the connection method is not limited to the embodiment described above. The guide pipe 3 is also supported in a swingable state by the socket member 5 in the axial direction of the guide pipe 3.

As shown in Fig. 2, the elastic member 4 is mounted to the socket member 5 by being encircled with the socket member 5. Through the encirclement with the socket member 5, the elastic member 4 prevents the vibration from transmitting from the socket member 5 to the control cable C through the cap 2. The elastic member 4 has the flange portion 44 extending in a direction perpendicular to the direction of the axis X in which the internal space portion 43 extends. The flange portion 44 is gripped by the socket member 5 in the direction of the axis X. The gripping of the flange portion 44 by the socket member 5 in the direction of the axis X restricts the movement of the elastic member 4 in the direction of the axis X with respect to the socket member 5, so that the elastic member 4 is mounted in the socket member 5.

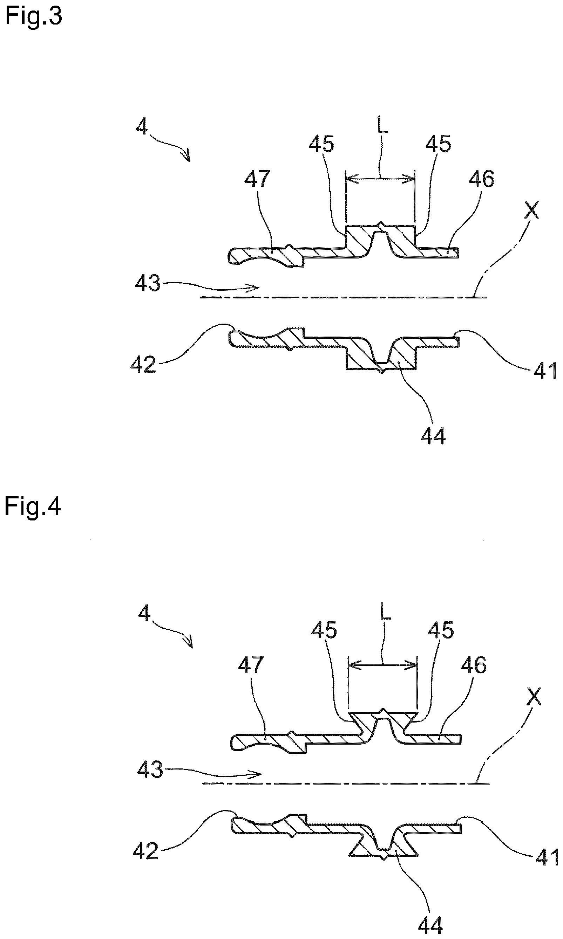

In the present embodiment, the elastic member 4 is formed in a generally cylindrical shape having the internal space portion 43, and has the flange portion 44 formed so as to project outward in the radial direction throughout the peripheral direction of its outer periphery, as shown in Figs. 1 and 2. As shown in Fig. 3, the flange portion 44 is configured to keep a length L in the direction of the axis X substantially constant along the radial direction. When gripped by the socket member 5 in the direction of the axis X, the flange portion 44 is substantially uniformly pressed to thereby be substantially uniformly elastically deformed in the direction perpendicular to the direction of the axis X, so that the resilience after pressing is substantially constant. The shape of the flange portion 44 is, however, not limited to the illustrated example as long as the flange portion 44 extends in the direction perpendicular to the direction of the axis X in which the internal space portion 43 extends so as to be gripped by the socket member 5 in the direction of the axis X. For example, the flange portion 44 may be configured to increase the length L in the direction of the axis X toward the outside in the radial direction, as shown in Fig. 4. In this case, the flange portion 44 is pressed more strongly on the side (outer peripheral side) spaced apart from the axis X in the direction perpendicular to the direction of the axis X than on the side (inner peripheral side) near the axis X, to thereby obtain a larger elastic deformation, so that the resilience becomes smaller. On the other hand, the flange portion 44 is pressed by a smaller pressing force on the inner peripheral side than on the outer peripheral side, to thereby obtain a smaller elastic deformation, so that the resilience becomes larger. The resilience of the flange portion 44 from the inner peripheral side to the outer peripheral side reduces, so that the amount which may be deformed under an external force reduces. In contrast, the resilience of the flange portion 44 from the outer peripheral side to the inner peripheral side increases, so that the amount which may be deformed under an external force increases.

In the present embodiment, the elastic member 4 has, in addition to the flange portion 44, a one-end-side reduced diameter portion 46 provided on one end side (operating portion side) in the direction of the axis X in which the internal space portion 43 extends from the flange portion 44, and an other-end-side reduced diameter portion 47 provided on the other end side (operated portion side) in the direction of the axis X from the flange portion 44, as shown in Figs. 2 to 4. The elastic member 4 is mounted to the socket member 5 by being encircled by the socket member 5 from the outside in the radial direction throughout the direction of the axis X so that the outer peripheries in the radial directions of the one-end-side reduced diameter portion 46, flange portion 44, and other-end-side reduced diameter portion 47 abut on the inner periphery of the socket member 5. The elastic member 4 absorbs the vibration transmitted from the socket member 5 through the contact surface between the outer peripheral surface of the elastic member 4 and the inner peripheral surface of the socket member 5, and prevents the vibration from transmitting to the control cable C from the socket member 5 through the cap 2.

The elastic member 4 is not limited to the example described above as long as it is encircled by the socket member 5 and is then mounted to the socket member 5. For example, the elastic member 4 may be configured to be at least partially encircled by the socket member 5 in the direction of the axis X. Further, the material of the elastic member 4 is not particularly limited as long as the elastic member 4 has a strength to support the cap 2 and the guide pipe 3, and has an elastic force to prevent the vibration from transmitting to the control cable C. For example, the elastic member 4 may be produced from rubber-like polymeric elastomer such as natural rubber, synthetic rubber, and synthetic resin elastomer, and for example, ethylene-propylene-diene-copolymer-based synthetic rubber (EPDM) is preferably used.

The socket member 5 is a member that supports the elastic member 4 by encircling the elastic member 4 and supports the cap 2 and the guide pipe 3 with the elastic member 4 being interposed therebetween. The socket member 5 is made of a hard member, and has pressing surfaces 53 that grip the flange portion 44 of the elastic member 4 in the direction of the axis X (in which the internal space portion 43 extends), as shown in Fig. 2. With the pressing surfaces 53 gripping the flange portion 44 in the direction of the axis X, the socket member 5 restricts the axial movement of the elastic member 4 with respect to the socket member 5.

In the present embodiment, the socket member 5 includes a first socket member 51 positioned on one end side (operating portion side) and a second socket member 52 positioned on the other end side (operated portion side), and is formed in a generally cylindrical shape as a whole, as shown in Figs. 1 and 2. The first socket member 51 and the second socket member 52 each have the pressing surface 53. The pressing surfaces 53 of the first socket member 51 and the second socket member 52 are formed so as to extend in a direction substantially perpendicular to the axis (coaxial to the axis X in which the internal space portion 43 extends) in which each of the first and second socket members 51, 52 extends. The first and second socket members 51, 52 are configured to use their pressing surfaces 53 to grip the flange portion 44 of the elastic member 4 in the direction of the axis X by being connected to each other. In addition, when connected to each other, the first and second socket members 51, 52 encircle the elastic member 4 so as to abut on the outer peripheries in the radial directions of the one-end-side reduced diameter portion 46, flange portion 44, and other-end-side reduced diameter portion 47 of the elastic member 4. The connection method is not limited as long as the first and second socket members 51, 52 use their pressing surfaces 53 to grip the flange portion 44 of the elastic member 4 in the direction of the axis X and are then connected so as to encircle the elastic member 4. For example, the first and second socket members 51, 52 may be connected by a known connection method such as screwing, fitting, or bonding. Further, in the present embodiment, the first and second socket members 51, 52 are members divided in the direction of the axis X, but may be configured as members divided in the direction perpendicular to the direction of the axis X. Further, when connected to each other, the first and second socket members 51, 52 may be configured such that either of their inner peripheral surfaces abuts on the outer peripheral surface of the elastic member 4 or on at least a part of the outer peripheral surface of the elastic member 4.

The socket member 5 is mounted to the bracket B which is a mounting object. In the present embodiment, the socket member 5 is provided with a mounting portion 54, as shown in Figs. 1 and 2. The socket member 5 is mounted to the bracket B by engaging the mounting portion 54 with the bracket B. In the present embodiment, the mounting portion 54 is formed as an annular groove in the outer periphery of the socket member 5. However, the shape of the mounting portion 54, the position where the mounting portion 54 is provided, the method of mounting the mounting portion 54 to the mounting object are not particularly limited as long as it is possible to mount the socket member 5 to the mounting object.

The socket member 5 is made of a hard member as described above. With the socket member 5 made of a hard member, when the pressing surfaces 53 of the socket member 5 press the flange portion 44 of the elastic member 4 in the direction of the axis X, the shapes of the pressing surfaces 53 are kept substantially constant, and therefore, instead of the pressing surfaces 53, the flange portion 44 is preferentially deformed. The material of the socket member 5 is not particularly limited as long as it is made of a hard member, and for example, it is possible to adapt a hard resin, metal, or the like.

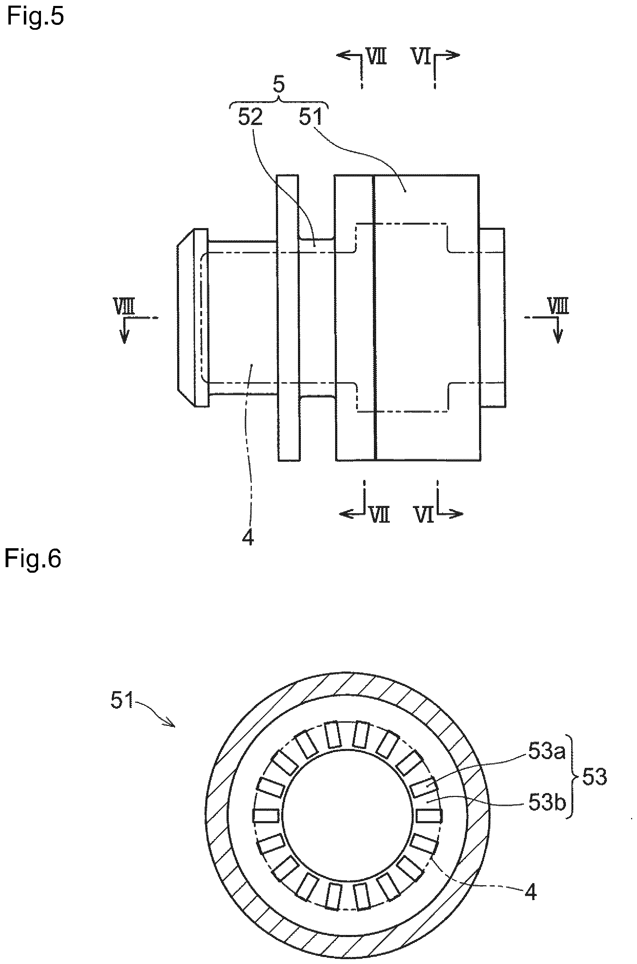

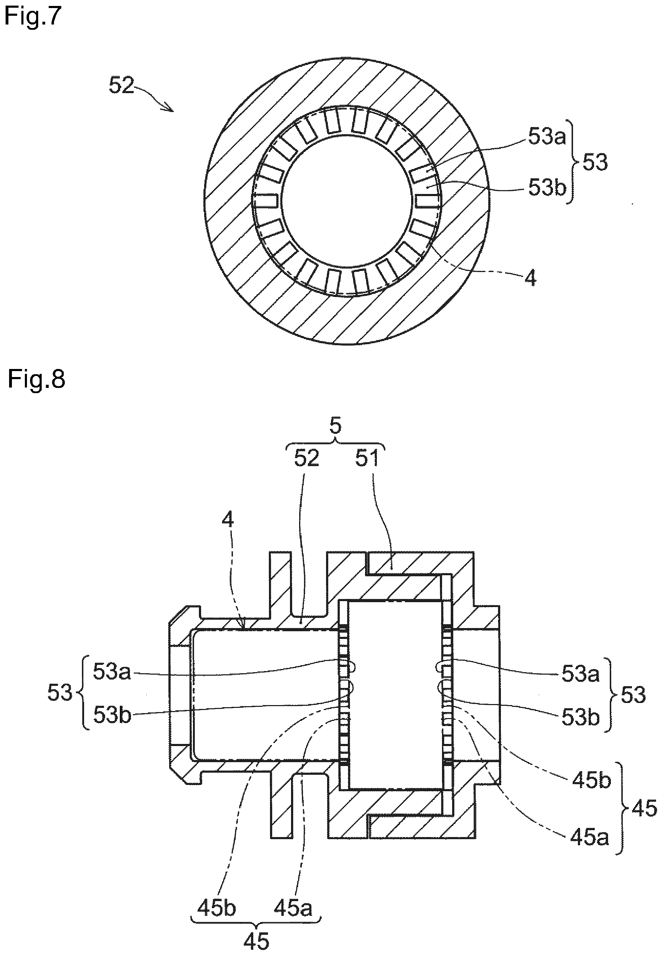

Next, the structure between the flange portion 44 of the elastic member 4 and the pressing surfaces 53 of the socket member 5 will be described in detail with reference to Figs. 5 to 8. Fig. 5 is a side view of the socket member 5, Fig. 6 is a cross-sectional view taken along the line VI-VI in Fig. 5, Fig; 7 is a cross-sectional view taken along the line VII-VII in Fig. 5, and Fig. 8 is a cross-sectional view taken along the line VIII-VIII in Fig. 5. The elastic member 4 is shown by long dashed double-short dashed lines in any of the drawings.

The elastic member 4 has a flat portion 45 on the surface of the flange portion 44 facing the direction of the axis X in which the internal space portion 43 extends, as shown in Figs. 2 to 4. The flat portion 45 is configured as a generally flat surface and is provided on the end surface of the flange portion 44 in the direction of the axis X. When the elastic member 4 is mounted to the socket member 5 and the flange portion 44 is gripped by the socket member 5, the flat portion 45 is pressed by the pressing surface 53 of the socket member 5. The flat portion 45 may be provided on at least one of the surfaces of the flange portion 44 facing the direction of the axis X, and it is not particularly limited. In the present embodiment, however, it is provided on both surfaces (on the operating portion side and the operated portion side) of the flange portion 44 facing the direction of the axis X. In addition, in the present embodiment, the flat portion 45 is formed so as to extend in the direction substantially perpendicular to the direction of the axis X, as shown in Fig. 3. The flat portion 45 may be provided on the surface of the flange portion 44 facing the direction of the axis X, and its extending direction is not limited. For example, the flat portion 45 may be formed so as to be inclined from the direction perpendicular to the direction of the axis X, as shown in Fig. 4.

As shown in Figs. 6 to 8, the pressing surface 53 of the socket member 5 is provided with a plurality of contact portions 53a that come in contact with the flat portion 45 and a plurality of non-contact portions 53b having a spacing with respect to the flat portion 45. The contact portion 53a is a portion that comes in contact with the flat portion 45 when the pressing surface 53 of the socket member 5 grips the flange portion 44 of the elastic member 4 in the direction of the axis X and the pressing surface 53 then presses the flat portion 45 of the flange portion 44. On the other hand, the non-contact portion 53b is a portion having a spacing in the direction of the axis X with respect to the flat portion 45 when the pressing surface 53 presses the flat portion 45. The contact portion 53a and the non-contact portion 53b are formed of a hard member, so that even though the pressing surface 53 presses the flat portion 45, the shapes of the contact portion 53a and the non-contact portion 53b are kept substantially constant. In contrast, when the flat portion 45 is pressed by the pressing surface 53, a portion (flat-portion-side contact portion 45a) in contact with the contact portion 53a, of the flat portion 45, is pressed by the contact portion 53a and is thereby elastically deformed. On the other hand, a portion (flat-portion-side non-contact portion 45b) opposed to the non-contact portion 53b, of the flat portion 45, prevents the pressing of the pressing surface 53, thereby preventing elastic deformation. Here, the flat-portion-side contact portion 45a and the flat-portion-side non-contact portion 45b are configured to have a generally flat shape, so that the flat-portion-side contact portion 45a has a minimum spacing near the flat-portion-side contact portion 45a as compared with the case where it is formed in a projecting shape like the prior art, and as a result, deformation in the thickness direction (direction of the axis X) and the width direction (direction perpendicular to the axis X) is prevented. Thus, the effect of the deformation of the flat-portion-side contact portion 45a on the flat-portion-side non-contact portion 45b is prevented, and the pressure applied to the flat-portion-side non-contact portion 45b due to the deformation of the flat-portion-side contact portion 45a is prevented. Therefore, even though the flange portion 44 is gripped by the socket member 5, a portion where the elastic member 4 does not come in contact with the socket member 5, that is, the flat-portion-side non-contact portion 45b is hardly pressed by the pressing surfaces 53, and hardly receives pressure due to the deformation of the flat-portion-side contact portion 45a, so that elastic deformation is prevented, which may in turn prevent the reduction of the vibration isolating effect. Further, when the portion of the flange portion 44 pressed by the contact portion 53a is deformed, the socket member 5 relatively moves in the axial direction with respect to the elastic member 4, so that the flange portion 44 is entered into a recessed space formed between a contact portion 53a and an adjacent contact portion 53a. In this case, the ends of the contact portions 53a around the axis are engaged with the boundaries between the flat-portion-side contact portions 45a and the flat-portion-side non-contact portions 45b, to thereby prevent the rotation of the elastic member 4 around the axis.

Further, when pressed by the contact portion 53a to thereby be elastically deformed, the flat-portion-side contact portion 45a becomes harder than the state before pressing by the contact portion 53a. This makes fixing of the cap 2 that fixes the terminal of the outer casing C1 in the direction of the axis X more rigid, which in turn prevents the movement of the outer casing C1 in the direction of the axis X. Therefore, it is prevented that the outer casing C1 is moved in the direction of the axis X by following the action of pushing and pulling the inner cable C2, so that the occurrence of the stroke loss of the inner cable C2 is prevented, resulting in improvement in transmission of the operation force of the inner cable C2. On the other hand, since the elastic deformation of the flat-portion-side non-contact portion 45b is prevented, the lowering of the capability of absorbing vibration is prevented, to thereby prevent the vibration from transmitting to the control cable C.

In the present embodiment, the pressing surfaces 53 of the socket member 5 on both the one end side (operating portion side) and the other end side (operated portion side) have the contact portions 53a and the non-contact portions 53b, as shown in Fig. 8. The contact portions 53a are formed as the surface of the projecting portion on the side of the flat portion 45 that projects toward the flat portion 45 of the elastic member 4. On the other hand, the non-contact portions 53b are formed as the bottom surface of the recessed portion that is recessed to the side opposite the flat portion 45 of the elastic member 4 from the above-mentioned projecting portion. In the present embodiment, the contact portions 53a and the non-contact portions 53b are alternately provided around the axis X of the elastic member 4, as shown in Figs. 6 and 7. When the contact portions 53a and the non-contact portions 53b are alternately provided around the axis X, even though the control cable C and the cap 2 are inclined from the direction of the axis X and the pressing force with which the pressing surfaces 53 press the flat portions 45 increases at a specific angle around the axis X, the reduction of the vibration isolating effect on the flat-portion-side non-contact portion 45b may be prevented. In particular, in the present embodiment, the contact portions 53a and the non-contact portions 53b are radially provided. When the contact portions 53a and the non-contact portions 53b are radially provided along the radial direction of the elastic member 4, even though the control cable C and the cap 2 are largely inclined from the direction of the axis X and the pressing force with which the pressing surfaces 53 press the flat portions 45 further increases at a specific angle around the axis X, the reduction of the vibration isolating effect on the flat-portion-side non-contact portion 45b may be prevented. However, the plurality of the contact portions 53a and the plurality of the non-contact portions 53b may be provided on the pressing surfaces 53 so that the vibration can be prevented from transmitting to the control cable C, and their arrangements are not limited to the example shown in the drawings. For example, the contact portions 53a and the non-contact portions 53b may be provided only on the pressing surface 53 on either the operating portion side or the operated portion side of the socket member 5. Alternatively, the contact portions 53a and the non-contact portions 53b may be alternately provided in the radial direction of the elastic member 4.

### Reference Signs List

1 Terminal support device
2 Cap
21 Outer casing fixing portion
22 Inner cable inserting portion
23 Collar
3 Guide pipe
31 Spherical portion
4 Elastic member
41, 42 Opening portion
43 Internal space portion
44 Flange portion
45 Flat portion
45a Flat-portion-side contact portion
45b Flat-portion-side non-contact portion
46 One-end-side reduced diameter portion
47 Other-end-side reduced diameter portion
5 Socket member
51 First socket member
52 Second socket member
53 Pressing surface
53a Contact portion
53b Non-contact portion
54 Mounting portion
A Control cable assembly
B Bracket
C Control cable
C1 Outer casing
C2 Inner cable
L Axial length of flange portion
R Rod
X Axis in which the internal space portion of the elastic member extends

## Claims

1. A terminal support device, comprising:
a cap to which a terminal of an outer casing of a control cable is fixed;
a guide pipe which guides an inner cable in a desired direction;
an elastic member having an opening portion at both ends; and
a socket member which encircles the elastic member,
wherein the socket member is made of a hard member,
the elastic member has an internal space portion communicating with the opening portion at both the ends,
the cap and the guide pipe are connected to the opening portion at both the ends of the elastic member so as to be opposite to each other,
the elastic member has a flange portion extending in a direction perpendicular to an axial direction in which the internal space portion extends, and a flat portion on a surface facing the axial direction of the flange portion,
the socket member has a pressing surface gripping the flange portion in the axial direction, and
the pressing surface is provided with a plurality of contact portions that come in contact with the flat portion and a plurality of non-contact portions having a spacing with respect to the flat portion.

2. The terminal support device according to claim 1, wherein the contact portions and the non-contact portions are alternately provided around the axis of the elastic member.

3. The terminal support device according to claim 1 or 2, wherein the contact portions and the non-contact portions are radially provided.

4. A control cable assembly, comprising:
the terminal support device according to any of claims 1 to 3; and
a control cable having an outer casing and an inner cable,
wherein the cap of the terminal support device is provided at a leading end of the outer casing.
